# EUROPEAN PATENT APPLICATION

(11) **EP 0 670 355 A1**
(43) Date of publication of application: **06.09.1995**
(21) Application number: 95101468.7
(22) Date of filing: 03.02.1995
(51) Int. Cl.: C09J 4/00, C09D 4/00, C08F 291/00

(54) **Water-based curable and cured compositions and a method for adhering a coating or adhesive to a substrate**

(30) Priority: 04.03.1994 US 206434
(71) Applicant: SARTOMER COMPANY, INC., Exton, PA 19341 (US)
(72) Inventor: Hazell, Thomas W., West Chester, Pennsylvania, 19380 (US); Nagel, Walter R., West Chester, Pennsylvania, 19380 (US); Costin, Richard, West Chester, Pennsylvania, 19380 (US); Ceska, Gary W., West Chester, Pennsylvania, 19380 (US)
(74) Representative: Chaillot, Geneviève

(57) **Abstract**

Curable composition having improved substrate adhesion, comprising :
(a) a water-soluble or water-dispersible compound;
(b) an effective amount of a metal salt of an α, β- ethylenically unsaturated carboxylic acid,
(c) an effective amount of a water-soluble curing initiator, and
(d) a dissolving or dispersing amount water.
Application to a method for adhering a coating or adhesive to a substrate.

## Description

The present invention relates to water-based curable and cured compositions. In particular, the invention relates to curable and cured water-based compositions in which improved substrate adhesion is achieved by using an α, β-ethylenically unsaturated carboxylic acid as a crosslinking agent.

Conventional compositions for coatings and adhesives typically use organic solvents to dissolve or disperse the reactive ingredients. The use of these organic solvents is environmentally disadvantageous due to the toxicity and polluting potential of the solvents. Further, use of organic solvents is economically disadvantageous because of the costs of the solvents. Thus, it is desirable to use water-based coating and adhesive compositions in which the use of organic solvents is eliminated.

However, the adhesiveness of water-based coating and adhesive compositions to substrates is diminished compared to the corresponding solvent-based compositions comprising the same resins. Thus, a need exists for water-based coating and adhesive compositions which exhibit improved substrate adhesion.

The term "substrate", as used herein, is intended to include metals, glass, rubbers or elastomers, plastics, polyesters, polyamides, polyacetals, and woven fabrics made of glass fibers or natural or synthetic organic fibers.

The term "water-soluble compound", as used herein, is intended to include any water-soluble or water-dispersible monomer, oligomer, polymer, or mixtures thereof which is known in the art to be suitable for forming substrate coatings or adhesives. Such compounds typically contain some functionality, such as hydroxyl group, carboxyl group, or the like. Additionally, these compounds may further contain a double bond or easily abstractible hydrogen atom, that render suitable for crosslinking.

Illustrative of such monomers, without limitation, are (meth) acrylic acid and monoesters thereof, crotonic acid, maleic acid, itaconic acid and the like, aromatic vinyl monomers, nitrogen-containing alkyl acrylates, amide compounds, vinyl compounds, nitrile compounds, and diene compounds. Other examples of such monomers include polyol poly(meth)acrylates such as polyethylene glycol di(meth)acrylate, polypropylene glycol mono(meth)acrylate, and alkoxylated triacrylates such as ethoxylated trimethylolpropane triacrylate.

Water-soluble or water-dispersible polymers which may be used in the present invention include, without limitation, cellulosic polymers such as alkyl celluloses and derivatives thereof, vinyl polymers such as polyvinyl alcohol, partially hydrolyzed polyvinyl acetate, and polyvinylpyrrolidone, acrylic polymers and copolymers such as poly(meth)acrylates, poly(meth)acrylamides, inorganic polymers, polyvinyl formal, polyvinyl acetate, chlorinated polyvinyl chloride, copolymers of vinyl acetate and vinyl chloride, copolymers of vinyl acetate and ethylene, copolymers of (meth)acrylic acid with ethylene and with conjugated dienes and posthalogenated products thereof, chlorosulfonated polyethylenes, brominated poly (2,3-dichloro-1,3-butadiene), copolymers of α-chloroacrylonitrile or α-bromoacrylonitrile with 2,3-dichloro-1,3-butadiene, copolymers of vinylpyridine and conjugated dienes, natural rubber, polystyrene, neoprene, styrene-butadiene copolymers, polyvinylchloride halogen-containing rubbers such as polychloroprene,, polybutadiene, polyethylene, chlorinated ethylene-propylene-diene terpolymers, chlorinated butadiene-styrene copolymers, and lattices of natural rubber or synthetic rubbers like neoprene, styrene-butadiene rubber, nitrile-butadiene rubber, carboxylated nitrile-butadiene rubber, and the like.

The present invention is based on the discovery that a metal salt of an α, β-ethylenically unsaturated carboxylic acid can be advantageously used in coating and adhesive compositions containing water and the aforedescribed water-soluble compounds in order to improve substrate adhesion. The compositions and methods of the present invention are those in which organic solvents are eliminated and replaced by water, in a dissolving or dispersing amount but which exhibit improved adhesiveness to substrates compared to conventional water-based coating and adhesive compositions. The preferred metal salts used in the present invention are those of acrylic or methacrylic acid which correspond to the formula 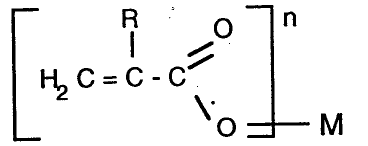
wherein M is the metal, n is the valency of the metal M and R is selected from the hydrogen atom and the methyl group. The metal M of the metal salt useful in the present invention may be aluminium, antimony, barium, cadmium, calcium, iron, lead, magnesium, mercury, molybdenum, nickel, potassium, silver, titanium, and zinc. The preferred metal is zinc. The preferred metal salt is zinc diacrylate.

The metal salt may be incorporated into the water or water-dispersible soluble compound by blending or, alternatively, the α, β-ethylenically unsaturated acid and a metal compound, such as oxide, hydroxide, carbonate, and the like, may be admixed into the water-soluble or water-dispersible and reacted to form the metal salt in situ.

The amount of metal salt to be used in the compositions and methods of the present invention should be an amount effective to yield an improvement in adhesion of the composition to the substrate. Preferably, the amount to be used should be from about 0.1 part to about 40 parts and more preferably from about 1 part to about 30 parts per 100 parts of the water-soluble or water-dispersible compound.

Curing may be initiated by the addition of a suitable water-soluble initiator to the coating or adhesive composition of the invention. Examples of such initiators include water-soluble hydroperoxides such as tertiary alkyl hydroperoxides, including, without limitation, 2,5-dihydroperoxy-2,5-dimethylhexane, tertiary butyl hydroperoxide, tertiary amyl hydroperoxide, and cumene hydroperoxyde.

Additional suitable initiators include azo initiators such as 2,2'-azobis (2-amidinopropane) dihydrochloride, 2,2'-azobis (4-methoxy-2,4-dimethylvalero-nitrile), 4,4'-azobis (4-cyanovaleric acid), 2,2'-azobis (methyl isobutyrate), 2,2'-azobis (N,N'-dimethylene isobutyramidine) dihydrochloride, 2,2'-azobis [2-2(2-imidazolin-2-yl) propane], 2,2'-azobis [2-methyl-N-(2-hydroxyethyl)-propionamide], and 1,1'-azobis (cyclohexane-1-carbonitrile).

Further, suitable curing initiators include redox systems comprising a reducing agent, such as a sulfite or bisulfite of an alkali metal or ammonium and an oxidant, such as an alkali metal or ammonium persulfate or thiosulfate.

The curing initiators can be used singly or in any suitable combination. The amount of initiator used is an amount effective to initiate curing of the composition on exposure to heat. Preferably the amount of initiator used may be from about 1 part to about 10 parts, more preferably from about 2 parts to about 6 parts per 100 parts of the water- soluble or water-dispersible compound.

Curing may be carried out at a low temperature from about 20°C to about 350°C and preferably from about to 60°C to about 240°C. Cure times will depend upon the water-soluble or water-dispersible compound, curing initiator and curing temperature selected. In general, cure times will range from about 2 minutes to about 8 hours.

The coating compositions of the present Invention may be prepared for application in any conventional manner and may further include additives such as pigments, antioxidants, dispersing aids, stabilizers and other additives that may be desirable depending on the end use of the coating. The coatings prepared from the compositions of the present invention may be applied to the substrate by any conventional means such as dipping, spraying, roller coating or the like. The coating composiitons may be used in a variety of settings such as paints, protective coatings, and the like.

Adhesive compositions of the present invention may contain additives such as fillers, extenders, coloring agents, dispersing agents, surfactants, film-forming agents, viscosity scorch retardant monomers, and the like. They may be applied to a surface of the substrates to be joined by any conventional means such as dipping, spraying, brushing, or the like. The adhesive composition is then dried at ambient temperature or under forced drying conditions and bonding of the substrates accomplished at conditions of time, temperature, and pressure effective to achieve bonding. Alternatively, drying of the adhesive composition may be omitted. The adhesive coated substrate surfaces are preferably joined together under pressure. The adhesives may be used for metal to metal bonding as well as for rubber to metal bonding.

The invention will be clarified by a consideration of the following examples.

### EXAMPLE 1 (COMPARATIVE)

30 g of ethoxylated trimethylolpropane triacrylate and 0.5 g cumene hydroperoxide were mixed in 15 g water until dissolved at 40°C. The formulation was coated on two 0.8 mm thick cold-rolled steel adhesion panels previously washed with methanol and dried. The adhesion panels were overlapped one inch with a coating of 0.4 mm thickness between and place in a 1.9 mm plaque mold, preheated to 160°C, and then cured in a press for 20 minutes after which they were removed and cooled for 2 jours. Lap shear adhesion was measured on a Thwing-Albert tensile in accordance with ASTM D 816 using a crosshead speed of 25.4 mm/min. and the results, which may be found on Table 1, were reported in KN/m².

### EXAMPLES 2 and 3

Coatings were produced and tested by repeating the procedures of Example 1, except that the formulations, which may be found on Table 1, were followed. The zinc diacrylate was added to the water, warmed to 40°C, and mixed until dissolved. The remaining ingredients were then added and mixed until dissolved.

**TABLE 1**

| EXAMPLE | 1 | 2 | 3 |
|---|---|---|---|
| ETPTMA (1) | 30 | 30 | 20 |
| zinc diacrylate | -- | 3 | 10 |
| water | 15 | 15 | 15 |
| cumene hydroperoxyde | 0.5 | 0.5 | 0.5 |
| cure time (minutes) | 20 | 20 | 20 |
| lap shear adhesion | 83 | 648 | 3450 |
| % elastomer after failure | 0 | 65 | 90 |

| | | | |
|---|---|---|---|
| (1) Ethoxylated trimethylolpropane trimethacrylate available as SR-9035 from Sartomer Company, Inc., Exton, Pennsylvania. | | | |

### EXAMPLE 4 (COMPARATIVE)

3 g. of polyvinyl acetate latex adhesive were applied to clean cold rolled steel adhesion panels. The adhesion panels were overlapped 25.4 mm with 0.4 mm thickness of adhesive composition between , cured for 120 minutes at 95°C, and subsequently measured for lap shear adhesion. Results may be found on Table 2.

### EXAMPLE 5

An adhesive was produced and tested by repeating the procedures of Example 4 except that the formulation, cure time and cure temperature, which may be found on Table 2, were followed.

**TABLE 2**

| EXAMPLE | 4 | 5 |
|---|---|---|
| polyvinyl acetate latex ¹ | 3 | 3 |
| zinc diacrylate | -- | 0.2 |
| cumene hydroperoxyde | -- | 0.2 |
| cure time (minutes) | 120 | 8 |
| cure temperature (°C) | 95 | 210 |
| lap shear adhesion | 1035 | 4035 |

| | | |
|---|---|---|
| 1. Available as Elmer's Glue from Borden, Inc. | | |

### EXAMPLE 6 (COMPARATIVE)

40 g of CHEMLOK 607^{®,} a commercial rubber to metal water-based adhesive, were applied to two clean cold rolled steel adhesion panels at a thickness of 0.127 mm and dried in an oven at 98°C for 5 minutes. Subsequently, a stock of 100 g of a commercial elastomer, 10 g of magnesium oxide, 50 g of carbon black, 2 g of dicumyl peroxide, and 10.7 g of a scorch retardant monomer was cured at 160°C between the adhesion panels with a one inch overlap, at a thickness of 0.4 mm for 20 minutes inside of a 1.9 mm plaque mold. Lap shear adhesion was then measured on a tensile tester and reported on Table 3 as KN/m².

### EXAMPLE 7

To 40 g of CHEMLOK 607® were mixed 0.1 g of an azo initiator, and 0.4 g zinc diacrylate. The formulation was applied to adhesion panels, but not dried as in Example 6. The elastomer stock of Example 6 was subsequently cured between the adhesion panels, at a thickness of 0.4 mm, and tested as in Example 6.

**TABLE 3**

| EXAMPLE | 6 | 7 |
|---|---|---|
| CHEMLOX 607¹ | 40 | 40 |
| azo initiator | -- | 0.1 |
| zinc diacrylate | -- | 0.4 |
| elastomer | 100 | 100 |
| magnesium oxide | 10 | 10 |
| carbon black⁴ | 50 | 50 |
| dicumyl peroxide⁵ | 2 | 2 |
| scorch retardant monomer | 10.7 | 10.7 |
| lap shear adhesion | 6070 | 7240 |
| % elastomer adhered to steel after failure | 0 | 15 |

| | | |
|---|---|---|
| 1. A mixture of synthetic organic silicones in methanol solvent available from Lord Corporation, Erie, Pennsylvania. | | |
| 2. 2,2' azobis ( N,N' -dimethylene isobutyramidine) dihydrochloride available as VA 044 from WAKO Chemicals USA, Inc., Richmond, Virginia. | | |
| 3 Tyrin 0136, a chlorinated polyethylene obtained from Dow Chemical Company, Midland, Michigan. | | |
| 4 N 550 available from Harwick Chemical Corporation, Akron, Ohio. | | |
| 5 SR-519 available from Sartomer Company, Exton, Pennsylvania. | | |

### EXAMPLE 8 (COMPARATIVE)

A 0,4 mm coating of a water-soluble acrylic oligomer diluted with 50% water was applied to MYLAR®, SURLYN®, glass, and cold rolled steel and heated in an air circulating oven at 100°C. for 10 minutes. The substrates were subsequently examined for adhesion and the results reported in Table 4.

### EXAMPLE 9 (COMPARATIVE)

2.5 g. of an acrylic oligomer were mixed with 0.1 g. azo initiator in 2.5 g. of water. The formulation was applied at a thickness of 0.4 mm to the subtrates of Example 8, dried and examined as in Example 8.

### EXAMPLE 10

The formulation of Example 9 was used except that 0.2 g. zinc diacrylate was added to the formulation. The formulation was applied at a thickness of 0.4 mm, dried, and examined as in Example 9.

**TABLE 4**

| EXAMPLE | 8 | 9 | 10 |
|---|---|---|---|
| acrylic oligomer¹ | 2.5 | 2.5 | 2.5 |
| water | 2.5 | 2.5 | 2.5 |
| zinc diacrylate | -- | -- | 0.2 |
| azo initiator ² | -- | 0.1 | 0.1 |
| Mylar ®³ adhesion | peel off | peel off | no peel |
| Surlyn ®9910 ⁴ adhesion | peel off | some peel | little peel |
| Glass adhesion | peel off | peel off | little peel |
| Steel adhesion | cracked | cracked | some adhesion |

| | | | |
|---|---|---|---|
| 1. CN 455 available from Cray Valley, Villers-Saint-Paul, France. | | | |
| 2 2,2' azobis ( 2-amidinopropane) dihydrochloride, available as V 50 WAKO Chemicals. | | | |
| 3 Polyethylene terephthalate film available from E. I. Dupont DeNemours & Company, Wilmington, Delaware. | | | |
| 4 Ionomer resin available from Dupont DeNemours, Wilmington,Delaware. | | | |

### EXAMPLE 11

A styrene-butadiene latex was coated on cold rolled steel adhesion panels. The panels were overlapped 2.54 mm with the latex, at a thickness of 0.4 mm, between and cured for 60 minutes at 71° C. The panels were tested for lap shear adhesion and the results reported on Table 5.

### EXAMPLE 12

38 g. of the latex of example 11, 0.5 g. zinc diacrylate, and 1 g. cumene hydroperoxide were mixed and applied to cold rolled steel panels. The panels were overlapped 2.54 mm with a coating thickness of 0.4 mm and cured for 10 minutes at 71° C and the results were reported on Table 5.

**TABLE 5**

| EXAMPLE | 8 | 9 |
|---|---|---|
| styrene-butadiene latex¹ | 100 % | 38 |
| zinc diacrylate | -- | 0.5 |
| cumene hydroperoxide | -- | 0.1 |
| cure time (minutes) | 60 | 10 |
| lap shear adhesion | 0 | 690 |

| | | |
|---|---|---|
| 1. obtained from RPM Bondex International, St. Louis, Missouri. | | |

## Claims

1. A curable composition having improved substrate adhesion, comprising :
(a) a water-soluble or water-dispersible compound;
(b) an effective amount of a metal salt of an α, β - ethylenically unsaturated carboxylic acid,
(c) an effective amount of a water-soluble curing initiator, and
(d) a dissolving or dispersing amount of water.

2. The curable composition of claim 1, wherein the water-soluble compound is an alkoxylated triacrylate.

3. The curable composition of claim 1, wherein the water-soluble compound is an acrylic oligomer.

4. The curable composition of claim 1, wherein the water-soluble compound is polyvinyl acetate latex.

5. The curable composition of claim 1, wherein the water-soluble compound is a naturel or synthetic latex.

6. A curable compositon according to any claims 1 to 5, wherein the α, β - ethylenically unsaturated carboxylic acid is acrylic or methacrylic acid.

7. A curable composition according to any claims 1 to 6, wherein the metal of the metal salt is selected from aluminium, antimony, barium, cadmium, calcium, iron, lead, magnesium, mercury, molybdenum, nickel, potassium, silver,titanium and zinc.

8. A curable composition according to any of claims 1 to 7, wherein the metal salt of the α, β - ethylenically unsaturated carboxylic acid is present in an amount from 0.1 to 40 parts per 100 parts of the water-soluble or water-dispersible compound.

9. A curable composition according to any of claims 1 to 8, wherein the water-soluble curing initiator is a hydroperoxide, an azo initiator, a redox initiator, or mixtures thereof.

10. A curable composition according to any of claims 1 to 9, wherein the curing initiator is present in an amount from 1 to 10 parts per 100 parts of the water-soluble or water-dispersible.

11. A cured composition provided by curing a composition according to any of claims 1 to 10.

12. A cured compositon according to claim 11, wherein curing is effected at a temperature from 60°C to 240°C.

13. A cured composition according to claim 11 or claim 12 being in the form of a coating or adhesive.

14. A method for providing a curable composition according to claim 1, comprising mixing a water-soluble or water-dispersible compound, a water-soluble curing initiator, a dissolving or dispersing amount of water, an α, β - ethylenically unsatured carboxylic acid and a metal compount able to react with said acid to form a metal salt thereof.

15. A method for adhering a coating or adhesive to a substrate, comprising the steps of :
(a) coating at least one surface of said substrate with a curable composition according to any of claims 1 to 10, and
(b) exposing the coated compositon to heat to effect curing of the composition.
